# NEUE EUROPÄISCHE PATENTSCHRIFT

(11) **EP 1 027 174 B3**
(45) Veröffentlichungstag dieser Patentschrift: **05.10.2011**
(45) Hinweis auf die Patenterteilung: 17.07.2002
(21) Anmeldenummer: 98951225.6
(22) Anmeldetag: 26.08.1998
(51) Int. Cl.: B07C 3/20, G06K 9/03

(54) **VERFAHREN UND ANORDNUNG ZUM ERKENNEN VON VERTEILINFORMATIONEN AUF SENDUNGEN**
METHOD AND SYSTEM FOR RECOGNISING ROUTING INFORMATION ON LETTERS AND PARCELS
PROCEDE ET SYSTEME POUR RECONNAITRE DES INFORMATIONS DE ROUTAGE SUR DES ENVOIS

(30) Priorität: 04.11.1997 DE 19748702
(43) Veröffentlichungstag der Anmeldung: 16.08.2000
(73) Patentinhaber: SIEMENS AKTIENGESELLSCHAFT, 80333 München (DE)
(72) Erfinder: NIESWAND, Benno, D-78467 Konstanz (DE); ZEHREN, Jürgen, D-88709 Meersburg (DE)
(86) Internationale Anmeldenummer: PCT/DE1998/002512
(87) Internationale Veröffentlichungsnummer: WO 1999/022883

(56) Entgegenhaltungen:
- EP-A- 0 148 783
- EP-A- 0 584 607
- EP-A- 0 589 119
- EP-A- 0 726 540
- EP-A- 0 755 728

## Beschreibung

### Beschreibung

Die Erfindung betrifft ein Verfahren und eine Anordnung zum Erkennen von Verteilinformationen auf Sendungen nach den Oberbegriffen der unabhängigen Ansprüche 1 und 4.

Bei der Sortierung/Verteilung von Sendungen ist es nicht möglich, alle maschinenfähigen Sendungen vollständig automatisch zu verarbeiten. Die Gründe hierfür sind vielfältig und reichen von nicht gefundenen Adreßblöcken bis hin zu maschinell nicht auflösbaren Widersprüchen in der gelesenen Adresse. Die Leseelektronik ist in diesen Fällen gezwungen, die Verarbeitung abzubrechen, ohne ein finales Ergebnis liefern zu können.

Die heute bekannten Lösungen zum integrierten Bearbeiten von Sendungen basieren auf dem Prinzip einer 2-stufigen Verarbeitung, das vereinfacht wie folgt funktioniert. 1. Stufe:

Die Leseelektronik erhält vom Scanner ein unkomprimiertes Binär/Graubild und versucht die Sendung vollständig zu bearbeiten. Dabei können folgende Verarbeitungsschritte durchgeführt werden.
- ROI - Erkennen von Bereichen möglicherweise relevanter Information
- Separierung der Zeilen eines Bereiches
- Zeichenerkennung und Wortseparierung
- Adreßinterpretation mit Adreßanalyse - Zuordnung möglicher Bedeutungen eines Wortes
- Adreßkorrelation - Entscheidung für eine Bedeutung und Bestimmung des Sortierergebnisses aufgrund der Vergleichsergebnisse mit Referenzdaten (Wörterbuch)

Dabei ergeben sich in allen Verarbeitungschritten alternative Bedeutungen. Wird jedoch in einem der Schritte kein Ergebnis oder mehrere Ergebnisse mit gleicher Wahrscheinlichkeit erzielt, so daß letztlich keine eindeutige Bedeutung ermitteltwerden kann, so wird die Bearbeitung endgültig beendet. Die Sendung wird als Reject an die Maschinensteuerung abgegeben, die dann ein Videocodiersystem mit der weiteren Bearbeitung beauftragt.

### 2. Stufe:

Das Videocodiersystem erhält zeitgleich mit der Leseelektronik oder nach erfolgtem Reject ein komprimiertes Binärbild und versucht, nachdem die Maschinensteuerung den Auftrag erteilt hat, ebenfalls die Sendung vollständig zu bearbeiten. Teilergebnisse der Leseelektronik können dabei berücksichtigt werden. Ein gleichförmiger Codierfluß ist vor allem bei mehrstufiger Codierung aller relevanten Adressteile eine unbedingte Voraussetzung für einen hohen Durchsatz je Codierplatz. Die Minimierung des Codieraufwands je Sendung ist auf dem Wege der Verwendung von Teilergebnissen nur bedingt möglich, da die dadurch hervorgerufene Vielzahl von Einstiegspunkten der Codierung die Gleichförmigkeit stört. Die Bearbeitung folgt der Devise:
"Codieren geht schneller als Denken!"
Man nimmt daher bewußt in Kauf, daß unnötige Information eingeben wird, statt den Codierer mittels umfangreicher Benutzerführung auf die Eingabe der minimal nötigen Information zu beschränken. Dadurch ist auch die online-Fähigkeit infolge der notwendigen Codierzeit eingeschränkt (US-46 32 252).

Entscheidend für die Aufteilung in Online- und Offlinebearbeitung ist die Länge der mechanischen Verzögerungsstrecke der Sortiermaschine. Es werden grundsätzlich 2 verschiedene Systeme angeboten.

Maschinen mit kurzer Verzögerungsstrecke (ca. 4-5 Sek.) bearbeiten die Sendungen Online nur mittels einer Leseelektronik. Das nachgeschaltete Codiersystem wird Offline betrieben (US-49 92 649). Maschinen mit längerer Verzögerungstrecke können einen Teil der Sendungen zusätzlich auch im Codiersystem Online bearbeiten (DE 43 24 255). Nachteilig ist weiterhin das hohe Anforderungsniveau an die Fähigkeiten der Videocodierkräfte.
[0008a] Ein Verfahren mit den Merkmalen des Oberbegriffs des Anspruchs 1 und eine Vorrichtung mit den Merkmalen des Oberbegriffs des Anspruchs 4 sind aus EP 0424728 B1 bekannt. Dort wird die verzögerte Verarbeitung von Postsendungen beschrieben, wobei Postsendungen verarbeitet werden und nicht eindeutig erkannte Adressen per Videocodierung erfasst werden. Hierbei wird das Videocodieren zeitlich verzögert durchgeführt ("deferred processing").

Der in den unabhängigen Ansprüchen 1 und 4 angegebenen Erfindung liegt das Problem zugrunde auf der Oberfläche von Sendungen befindliche Verteilinformationen unter Verwendung von automatischen OCR-Lesern und Videocodierplätzen möglichst schnell bei geringen Anforderungen an die Videocodierkräfte zu lesen.

Dadurch, daßdieautomatische OCR-Verarbeitungseinheit bei nicht eindeutigem Resultat in einem der Verarbeitungsschritte die Verarbeitung eines Bildes nicht abbricht, sondern in einen Standby-Zustand übergeht und ein Auftrag für einen Videocodierplatz zur eindeutigen Lösung dieses Schrittes mit der Angabe der auszuführenden Operation erzeugt wird, sind geringere Anforderungen an die Videocodierkräfte notwendig. Darüber hinaus steigt die Verarbeitungsgeschwindigkeit des gesamten Leseprozesses, so daß der Anteil online verarbeitbarer Sendungen bei entsprechenden Zwischenspeichern steigt.
Vorteilhafte Ausführungen der Erfindung sind in den abhängigen Ansprüchen angegeben..
Durch die Darstellung der Aufgabe auf dem Bildschirm des Videocodierplatzes und die Aufteilung der Videocodierplätze auf verschiedene Aufgabenklassen gemäß derAnsprüche 2 und 3 ergibt sich ein besonders schnelles Codieren bei sehr geringen Codieranforderungen. Gemäß der Ansprüche 5 und 6 ist es vorteilhaft, die Aufgaben für die Videocodierplätze mittels Auftragsformuliererzu erzeugen, die im KontextspeicherderOCR-Verarbeitungseinheit die nichteindeutigen Ergebnisse/Zwischenergebnisse suchen, entsprechende Aufgaben zur eindeutigen Lösung dieser Leseprobleme formulieren und sie an die Videocodierplätze zur Darstellung auf den Bildschirmen senden.
In vorteilhaften Ausgestaltungen nach den Ansprüchen 7 und 8 sind Antwortbearbeiter vorgesehen, die die Daten von den Videccodierplätzen in den Kontextspeicher einfügen, die nichteindeutigen Ergebnisse löschen und der OCR-Verarbeitungseinheit ein Signal zur Weiterführung des Leseprozesses senden.
Weiterhin ist es vorteilhaft, gemäß Anspruch 9 am Eingang der Videocodiereinrichtung einen Auftragsverteiler vorzusehen, der die eintreffenden Codieraufträge gemäß in einer Codierplatzdatenbank gespeicherter Aufgabenzuständigkeiten und Auslastungsmeldungen der Videocodierplätze an diese verteilt. Für eine besonders schnelle und effektive Arbeitsweise ist es gemäß Anspruch 10 vorteilhaft, der erfindungsgemäßen Anordnung einen schnellen automatischen online-Verteilinformationsleser vorzuschalten. Liest er die Verteilinformationen nicht innerhalb einer vorgegebenen kurzen Zeitspanne, werden die entsprechenden Bilder an die erfindungsgemäße Anordnung weitergeleitet.
Vorteilhaft ist es auch, gemäß Anspruch 11 mehrere Bilder parallel zu bearbeiten.

Nachfolgend wird die Erfindung in einem Ausführungsbeispiel anhand der Zeichnungen erläutert. Dabei zeigen
- FIG 1: die Verarbeitungsschritte beim Lesen der Verteilinformationen
- FIG 2: ein Blockbild zur Erläuterung des erfindungs- gemäßen Ablaufes
- FIG 3: ein Ablaufdiagramm eines Auftragsformulie- rers bei der Regionensuche
- FIG 4: ein Ablaufdiagramm eines Auftragsverteilers bei der Regionensuche
- FIG 5: die Darstellung des Auftrages zur Regionen- suche auf dem Bildschirm
- FIG 6: ein Ablaufdiagramm eines Antwortbearbei- ters bei der Regionensuche
- FIG 7: ein Ablaufdiagramm eines Auftragsformulie- rers bei unvollständig mit unklarer Bedeutung erkannten Adreßteilen in der Zeichenerken- nung und Adreßanalyse
- FIG 8: ein Ablaufdiagramm eines Auftragsverteilers bei unvollständig mit unklarer Bedeutung er- kannten Adreßteilen
- FIG 9: die Darstellung des Auftrages bei unvollstän- dig mit unklarer Bedeutung erkannten Adreßteilen
- FIG 10: ein Ablaufdiagramm eines Antwortbearbei- ters bei unvollständig mit unklarer Bedeutung erkannten Adreßteilen
- FIG 11: ein Ablaufdiagramm eines Auftragsformulie- rers bei der Adreßkorrelation
- FIG 12: ein Ablaufdiagramm eines Auftragsverteilers bei der Adreßkorrelation
- FIG 13: die Darstellung des Auftrages bei der Adreßkorrelation
- FIG 14: ein Ablaufdiagramm eines Antwortbearbei- ters bei der Adreßkorrelation

Das Bild einer zu bearbeitenden Sendung wird nach dem Scannen einem automatischen Leser zugeführt. Dabei ist es vorteilhaft aus Gründen der Vorhersagbarkeit des Systemverhaltens zunächst einen schnellen automatischen online-Leser als Primär-Leser mit der Aufgabe zu betrauen, der versucht, die Sendung ohne Interaktion oder Unterbrechung zu verarbeiten. Damit erhält man sicher ein Ergebnis in der Zeit, die die Sendung in der Maschine verweilt, so daß sofort aufgrund dieses Ergebnisses verteilt werden kann. Scheitert dieser Leseversuch, so wird das Bild der Sendung der erfindungsgemäßen Anordnung mit einer OCR-Verarbeitungseinheit 11 zugeführt, die sowohl die verbleibende Maschinenzeit nutzen, als auch völlig unabhängig davon ein Verteilergebnis für einen weiteren Maschinenlauf ermitteln kann. Diese OCR-Verarbeitungseinheit 11 besteht aus verschiedenen Funktionsgruppen, die die Sendung zum Teil parallel, zum Teil aber auch sequentiell bearbeiten. In diesem Beispiel wird eine Sendung für die Empfängerauslieferung codiert, gleichzeitig soll jedoch die Gültigkeit eines Stempels erkannt werden. Im folgenden werden die Abläufe in und zwischen den Baugruppen der erfindungsgemäßen Anordnung beschrieben. Die Baugruppen kommunizieren über eine vom Eetriebssystem zur Verfügung gestellte Socketschnittstelle, die es ermöglicht, die einzelnen Einheiten wahlweise auf einem Rechner oder auf verschiedenen via Ethernet verbundener. Rechnern zu plazieren.

Die CCR-Verarbeitungseinheit 11 versucht die Sendung vollständig zu bearbeiten. Dabei werden üblicherweise verschiedene Verarbeitungsschritte linear oder auch teilweise zyklisch durchlaufen. Prinzipiell hat jeder dieser Verarbeitungsschritte seine spezifischen Probleme zu einem eindeutigen Ergebnis zu kommen und ist daher ein Kandidat für die videocodierunterstützte Verarbeitung. Die auftretenden Probleme sind die gleichen, wie sie bereits in der Beschreibung des Standes der Technik aufgeführt wurden.

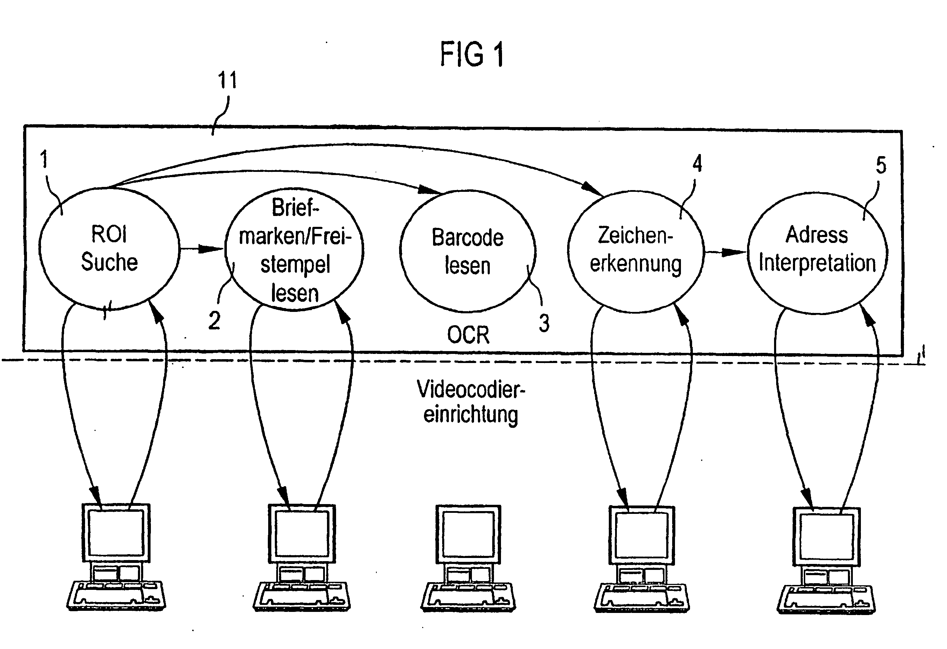

Die Figur 1 stellt die verschiedenen Verarbeitungsschritte in der OCR-Verarbeitungseinheit 11 und die daraus resultierenden Codierschritte dar. Dabei werden Schritte, die unabhängig von einander bearbeitbar sind, parallelisiert, während auf einander aufbauende Schritte sequentialisiert werden.

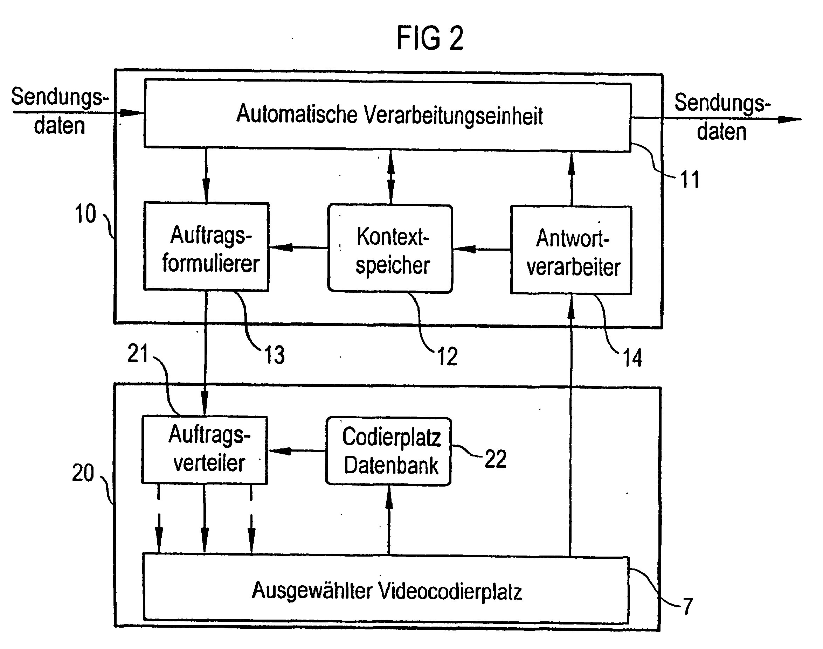

Die Sendungsdaten werden gemäß Figur 2 von der automatischen OCR-Verarbeitungseinheit 11 angenommen und entsprechend der Aufgabenstellung, die gemäß der in Figur 1 erläuterten Verarbeitungskette gerade zu lösen ist, verarbeitet. Dabei wird aus den Eingangsdaten und den vorliegenden Teil-/Ergebnissen ein Sendungskontext aufgebaut und im Kontextspeicher 12 gespeichert. Können die Teilergebnisse nicht auf ein eindeutiges Endergebnis hin reduziert werden, so ist die OCR-Verbeitungseinheit 11 zunächst einmal an ihrer Aufgabe gescheitert.
In diesem Zustand unterbricht die OCR-Verarbeitungseinheit 11 ihren Erkennungs- und Interpretationsprozess und verharrt in ihrem Verabeitungskontext. Dazu werden die Standard-Mechanismen moderner Multitask-Betriebssysteme ausgenutzt. Ein Auftragsformulierer 13 wertet den Sendungskontext aus und formuliert daraus für die zu lösende Aufgabe einen Auftrag an die Videocodiereinrichtung 20. Es wird also ein Auftrag an die Videocodiereinrichtung 20 formuliert, der aus dem Bild oder den Bildausschnitten der Sendung, entsprechenden Attributdaten und einer auszuführenden Operation besteht.

Am Eingang der Videocodiereinrichtung 20 wartet ein Auftragsverteiler 21 ständig auf eingehende Aufträge. Die Aufträge werden bzgl. der auszuführenden Operation analysiert und aus dem Pool verfügbarer Codierplätze 7 wird ein geeigneter Codierplatz 7 zur Lösung der Aufgabe ausgewählt. Bei der Auswahl ist die Auslastungssituation und der Codiermodus eines Arbeitsplatzes entscheidend. Ist kein geeigneter Codierplatz 7 verfügbar, wird eine Auftragsrückweisung an einen Antwortverarbeiter 14 zurückgesandt.
Der ausgewählte Codierplatz 7 erhält die Auftragsdaten und präsentiert dem Codierer das Sendungsbild auf einem hochauflösenden Bildschirm. Dieser führt die geforderte Codierleistung aus. Das Ergebnis wird an den Antwortverarbeiter 14 zurückgesandt.
Dieser fügt die Antwortdaten in den Sendungskontext, löscht die nichteindeutigen Daten und sorgt für die Fortführung des Erkennungs- und Interpretationsprozesses der OCR-Verarbeitungseinheit 11.

Zu den Codieraufgaben gehören im wesentlichen folgende Operationen:
- Bestätigung
   Der Codierer wird aufgefordert, ein vom automatischen Leser erkanntes Ergebnis zu bestätigen. Sehr häufig werden Ergebnisse vom Leser korrekt erkannt, müssen aber, aufgrund derzu garantierenden Fehlerrate und der errechneten Wahrscheinlichkeit für die korrekte Erkennung, verworfen werden. Durch eine schnelle Bestätigung eines Codierers werden diese Erkennungsergebnisse nicht mehrverworfen, sondern können sogar noch innerhalb der Online-Zeiten zur Sortierung verwandt werden.
- Selektion
   Der Codierer wählt zwischen mehreren Alternativen aus, die beim automatischen Erkennungsprozess als Möglichkeiten erarbeitet wurden. Danach wird der automatische Erkennungsprozess mit dem Feed-back aus dieser Entscheidungshilfe fortgesetzt. Es können die verschiedensten Objekte, von Teilstrings, alternativen relevanten Bildbereichen (ROI) bis hin zu Alternativen aus einer Adreßdatenbank zur Auswahl gestellt werden.
- Keying
   Der Codierer gibt Extrakte oder Vollstrings der von der OCR-Verarbeitungseinheit 11 markierten Adreßteile ein. Die Eingaben dienen der OCR-Verarbeitungseinheit 11 zur Ergänzung bzw. zur verbesserten Korrelation bei der Erkennung dieser Adresskomponenten.
- manuelle ROI
   Der Codierer wählt aus einem Übersichtsbild der Sendung (Großbriefe und Pakete) per Rasterverfahren oder per Touchscreen die geforderten relevanten Bildbereiche (ROI), z.B. das Adreßlabel des Empfängers, aus. Anschließend setzt die OCR-Verarbeitungseinheit 11 ihre Erkennungsaufgabe auf der manuell ermittelten ROI neu auf.

Alle Operationen sind einfach und generisch und enthalten kaum Länderspezifika, was notwendige kundenspezifische Adaptionen sehrstark reduziert. Die OCR-Verarbeitungseinheit 11 kann aus Ihrem aktuellen Kontext heraus um Videocodierunterstützung nachfragen und damit ihren Erkennungsprozess ideal durch Videocodierung ergänzt bekommen. Zur Steigerung der Effizienz des Lese- und Videocodiersystems laufen immer mehrere Erkennungsprozesse parallel. Zur Verbesseru ng der Ergonomie und zur Verringerung der Codierzeiten lassen sich die verschiedenen Codieraufgaben optional auf unterschiedliche Codierplätze aufteilen. Die Vorteile dieser interaktiven, integrierten Lese- und Videocodiermethode läßt sich wie folgt zusammenfassen:
- Einfache generische Codierstrategien und Codierregeln erleichtern den Lernprozess für den Videocodierer, insbesondere bei komplexen Adreßtrukturen bzw. hoher Codiertiefe, erheblich.
- Die Anforderung an die Fähigkeiten der Codierkräfte werden stark reduziert. Dies gilt ebenfalls in besonderem Maße für komplexe Adreßstrukturen und/oder hohe Codiertiefe (z.B. für Gangfolgesortierung oder integriertem Nachsenden).
- Die optimale Unterstützung des automatischen Leseprozesses steigert noch einmal die Online-Codierrate und die Effizienz des Lese- und Codiersystems.

Nachfolgend erfolgt eine nähere Erläuterung der Arbeitsweise anhand von Codieraufgaben ausgewählter Verfahrensschritte.

### Automatisch nicht auffindbare Adresse

Gerade im Bereich der Großbriefe kommt es sehr häufig vor, daß das eingescannte Bild, z.B. einer Zeitschrift neben dem Aufkleber mit der Empfängeradresse sehr viele zusätzliche Daten enthält, die einem Adreßblock ähnlich sehen. In diesen Fällen versagt die Adreßblocksuche sehr häufig vollständig oder findet nur durch rechenintensive parallele Verifikation sehr vieler Kandidaten die richtige Adresse, was jedoch oft zu einer Überschreitung der Online Verarbeitungszeit führt.

Die OCR-Verarbeitungseinheit 11 wird zunächst versuchen, den Empfängeradreßblock zu identifizieren.
a) Reichen die gefundenen Merkmale nicht für eine eindeutige oder variantenarme Bestimmung aus, wird dieser Verfahrensschritt eingefroren und folgende Verarbeitung initiiert:
   - Ein Auftrag an die Videocodiereinrichtung 20 wird mit folgenden Daten formuliert:
      - Sendungsbild inkl. Bildattribute laut TIFF Spezifikation
      - Koordinatenbeschreibung aller in Frage kommenden Bildbereiche
      - Typisierung der Anfrage, in diesem Fall: Anfrage nach Auswahl eines Bildbereiches zur Empfängerbestimmung
   - Ein Auftragsverteiler 21 der Videocodiereinrichtung 20 wählt einen geeigneten und verfügbaren Codierplatz 7 aus.
   - Der Codierplatz 7 stellt das Sendungsbild dar und bearbeitet die Anfrage.
   - Das Ergebnis der Codierereingabe wird an die anfragende OCR-Verarbeitungseinheit 11 zurückgesandt.
   Nach Erhalt der Antwort wird die Sendungsbearbeitung an der zuvor eingefrorenen Stelle wieder aufgenommen.
b) Reichen die gefundenen Merkmale nicht für die Bestimmung aus, wird der Kontext dieser Sendungsbearbeitung eingefroren und folgende Verarbeitung initiiert:
   - Eine Anfrage an die Videocodiereinrichtung 20 wird mit folgenden Daten formuliert ;
      - Sendungsbild inkl. Bildattribute laut TIFF Spezifikation
      - Typisierung der Anfrage, in diesem Fall: Anfrage nach Eigabe eines Bildbereiches zur Empfängerbestimmung
   - Der Auftragsverteiler 21 der Videocodiereinrichtung 20 wählt einen geeigneten und verfügbaren Codierplatz 7 aus.
   - Der Codierplatz 7 stellt das Sendungsbild dar und bearbeitet die Anfrage.
   - Das Ergebnis der Codierereingabe wird an die anfragende OCR-Verarbeitungseinheit 11 zurückgesandt.
   Nach Erhalt der Antwort wird die Sendungsbearbeitung an der zuvor eingefrorenen Stelle wieder aufgenommen.

In vielen Fällen ist gerade bei der Bereitstellung des richtigen Adreßblocks durch einen Videocodierer die Wahrscheinlichkeit einer anschliessend vollständig automatischen Bearbeitung des Adreßblocks sehr hoch, da fast alle Adreßaufkleber von Großbriefen maschinengeschrieben sind.

### Adresse mit unzureichender Glaubwürdigkeit

Gerade im Bereich der Geschäftsadressen kommt es häufig vor, daß eine Empfängeradresse zwar prinzipiell eindeutig ist, das Ergebnis des automatischen Abgleichs jedoch verworfen wird, da die Schreibweise zu keiner in der Adreßdatenbank auffindbaren Adresse mit ausreichenden Glaubwürdigkeit korreliert.

Die OCR-Verarbeitungseinheit 11 wird zunächst versuchen, den Empfängeradreßblock zu lesen. Reichen die gefundenen Merkmale nicht für die Erzielung der geforderten Glaubwürdigkeit aus, wird dieser Verfahrensschritt eingefroren und folgende Verarbeitung initiiert:
- Ein Auftrag an die Videocodiereinrichtung 20 wird mit folgenden Daten formuliert:
   - Sendungsbild inkl. Bildattribute laut TIFF Spezifikation
   - Vollständige Empfängeradresse
   - Typisierung der Anfrage, in diesem Fall:
      Anfrage nach Bestätigung einer Empfängeradresse
- Der Auftragsverteiler 21 derVideocodiereinrichtung 20 wählt einen geeigneten und verfügbaren Codierplatz 7 aus.
- Der Codierplatz 7 stellt das Sendungsbild dar und bearbeitet die Anfrage.
- Das Ergebnis der Codierereingabe wird an die anfragende OCR-Verarbeitungseinheit 11 zurückgesandt.
Nach Erhalt der Antwort wird die Sendungsbearbeitung an der zuvor eingefrorenen Stelle wieder aufgenommen.

In der Regel ist damit die Bearbeitung abgeschlossen.

### Sendung mit unleserlicher Adresse

Besonders im Bereich der Handschrifterkennung ist es nach heutigem technischen Stand häufig nicht möglich, Adressen vollständig automatisch zu lesen.

Die CCR-Verarbeitungseinheit 11 wird zunächst versuchen, den Empfängeradreßblock zu lesen. Reichen die gefundenen Merkmale an einer Stelle der Verarbeitung nicht für die weitere Verarbeitung aus, wird dieser Verfahrensschritt eingefroren und folgende Verarbeitung initiiert:
- Ein Auftrag an die Videocodiereinrichtung 20 wird mit folgenden Daten formuliert:
   - Sendungsbild inkl. Bildattribute laut TIFF Spezifikation
   - Koordinatenbeschreibung des Bildbereiches für den keine Verarbeitung möglich ist
   - Typisierung der Anfrage, in diesem Fall:
      Anfrage nach Eingabe des Adressteils, der durch die Koordinaten beschrieben wird
- Der Auftragsverteiler 21 der Videocodiereinrichtung 20 wählt einen geeigneten und verfügbaren Codierplatz 7 aus.
- Der Codierplatz 7 stellt das Sendungsbild dar und bearbeitet die Anfrage.
- Das Ergebnis der Codierereingabe wird an die anfragende OCR-Verarbeitungseinheit 11 zurückgesandt.
Nach Erhalt der Antwort wird die Sendungsbearbeitung an der zuvor eingefrorenen Stelle wieder aufgenommen.

In vielen Fällen wird durch das Schließen einer Lücke die automatische Bearbeitung bis zum vollständigen Ergebnis möglich. Ist dies nicht der Fall kann dieser Schritt beliebig oft für eine Sendung wiederholt werden.

Im weiteren werden die funktionalen Abläufe für bestimmte Leseabläufe näher erläutert:

### Regionensuche

Am Anfang der Bearbeitung steht immer die Auswahl der relevanten Bildbereiche (ROI), die das vollständige Bild auf geometrische und farbliche Merkmalsregionen hin untersucht und daraus zunächst Hypothesen bzgl. deren Bedeutung aufstellt. Während der Bearbeitung werden die Hypothesen, bestehend aus:
- Koordinatenwerte, die die Lage und Größe der Merkmalsregion beschreiben
   X/Y Wertepaar der linken unteren Ecke
   X/Y Wertepaar der linken oberen Ecke
   X/Y Wertepaar der rechten unteren Ecke
   X/Y Wertepaar der rechten oberen Ecke
- Bedeutungshypothese (z.B. Empfängeradreßblock, Freistempel, Absenderadreßblock) in einer Datenbank gespeichert, die im folgenden Sendungskontext genannt wird.

Bei nicht eindeutigem Ergebnis veranlaßt die für die Regionensuche verantwortliche Funktionsgruppe 1 der OCR-Verarbeitungseinheit 11 den Auftragsformulierer 13, die Videocodiereinrichtung 20 mit der eindeutigen Codierung zu beauftragen. Die Funktionsgruppe 1 selbst geht, bezogen auf diese Sendung, in eine Warteposition bis das Ergebnis des Videocodierens vorliegt. Aufgrund der Möglichkeiten zur Parallelisierung, die moderne Betriebssysteme bieten, wird jedoch bereits mit der Verarbeitung der nächsten Sendung begonnen.

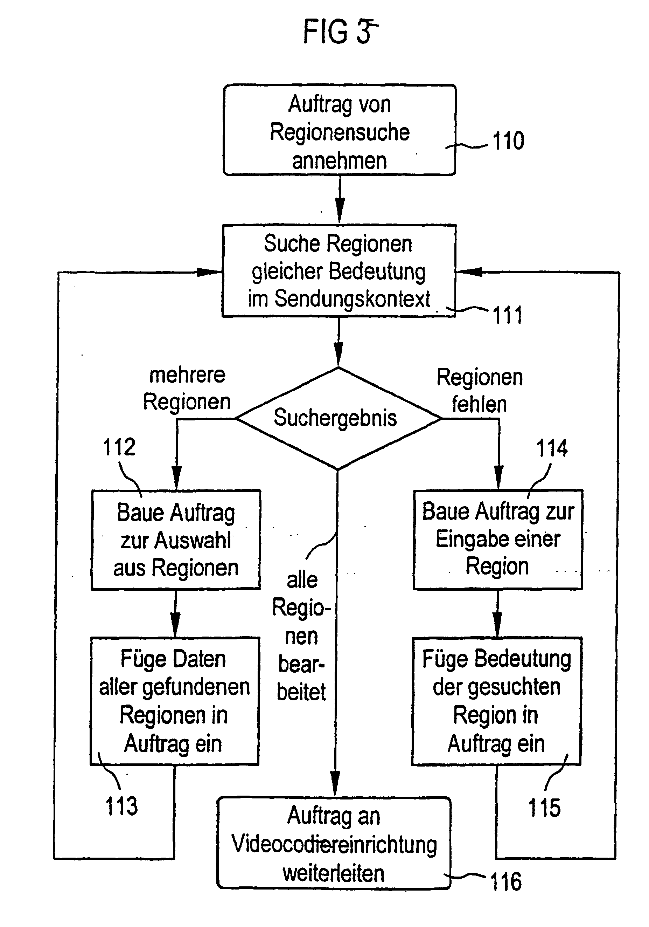

Die Figur 3 beschreibt die Funktionsweise des Auftragsformulierers 13, der den Kontextspeicher 12 solange nach mehrdeutigen oder nicht vorhandenen Regionen durchsucht, bis nur noch eindeutige und damit nicht zu bearbeitende Bereiche übrig bleiben.

Nach Annahme der Regionensuche 110 erfolgt die Suche nach mehrdeutigen oder nichtgefundenen Regionen 111. Werden Regionen gleicher Bedeutung gefunden, wird ein entsprechender Auswahlauftrag 112 formuliert, die Daten der gefundenen entsprechenden Regionen werden eingefügt 113. Werden keine Regionen gefunden, wird ein Auftrag 114 zur Eingabe einer Region mit der gesuchten Bedeutung 115 formuliert. Wurden alle Regionen bearbeitet, so wird ein Auftrag an die Videocodiereinrichtung 20 weitergeleitet 116.

Geht man davon aus, daß der Stempel eindeutig gefunden wurde, es jedoch verschiedene Bildbereiche mit Informationen gibt, die Ähnlichkeit mit der Form eine Empfängeradresse haben, so wird der Auftragsformulierer 13 genau diese Anfrage an die Videocodeiereinrichtung 20 weiterleiten.

Die Gegenstelle in der Videocodiereinrichtung 20 ist der Auftragsverteiler 21, der nicht den gesamten Auftrag analysiert, jedoch die Art des Auftrages ermitteln muß, um aus seiner Codierplatzdatenbank 22 aller derzeit verfügbaren Videocodierplätze 7 den auszuwählen, dessen Bediener die zu Lösung dieser Aufgabe benötigten Fähigkeiten besitzt. Diese Aufgabe ist von großer Bedeutung für die Effizienz dieses Verfahrens, da jeder Codierer mit genügend Codieraufträgen versorgt werden muß, um unnötige Arbeitspausen zu vermeiden.

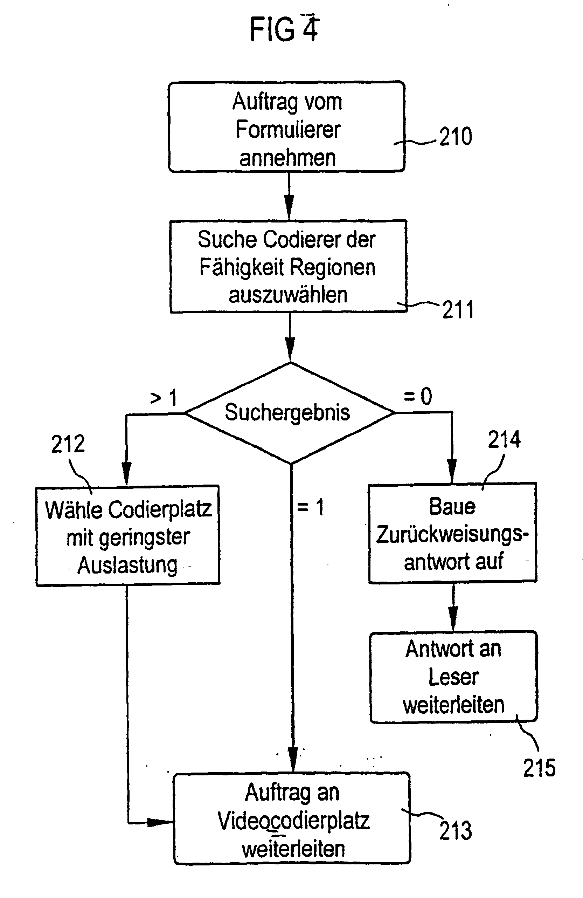

Die Figur 4 beschreibt die Funktionsweise des Auftragsverteilers 21.

Der Fall keinen geeigneten Codierplatz zu finden kann vor allem bei kleinen Codiereinrichtungen mit stark diversifizierten Codieraufgaben zu einer Verlängerung der Bearbeitungszeit führen, da in diesem Fall die Bearbeitung im Leser abgebrochen wird um zu einem späteren Zeitpunkt, wenn geeignete Codierer wieder verfügbar sind, erneut aufgesetzt zu werden.

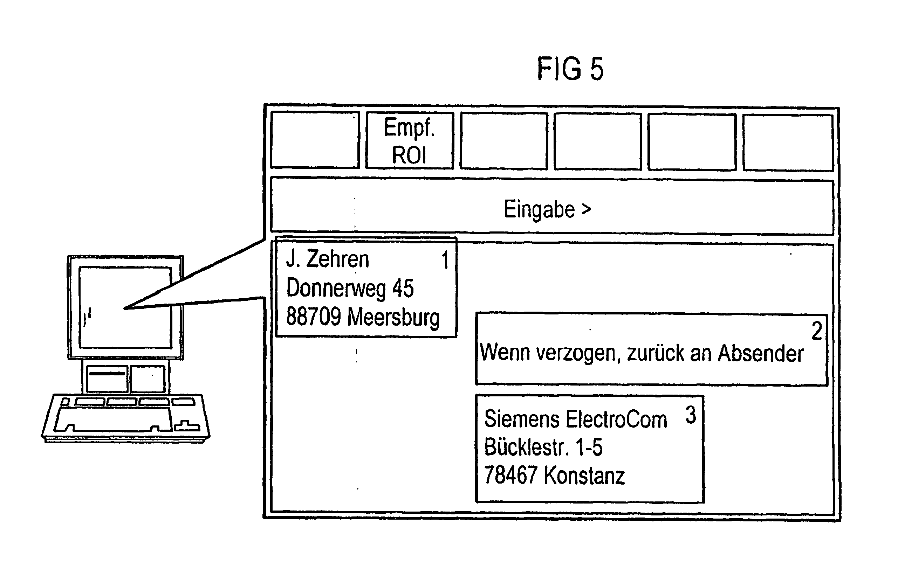

Der Codiervorgang selbst ist möglichst ergonomisch zu gestalten. Die Figur 5 zeigt die graphische Aufbereitung der Daten auf dem Codierplatz. Die Auswahl erfolgt über den Ziffernblock, so daß der Codierer auch andere tastaturbasierende Codieraufgaben übernehmen kann.

Das Ergebnis der Codierereingabe, die Nummer der Region, wird dazu verwendet, die Daten dieser Region als Ergebnis an die OCR-Verarbeitungseinheit 11 zurückzusenden. Enthält die Anfrage Regionen verschiedener Bedeutung, werden diese nach ihrer Bedeutung zusammengefaßt und in mehreren Schritte bearbeitet.

Der Antwortbearbeiter 14 der Regionensuche löscht die mehrdeutigen Regionen im Sendungskontext und fügt die Ergebnisregionen ein. Somit ist nun für jede zu bearbeitende Region ein eindeutiges Ergebnis verfügbar.

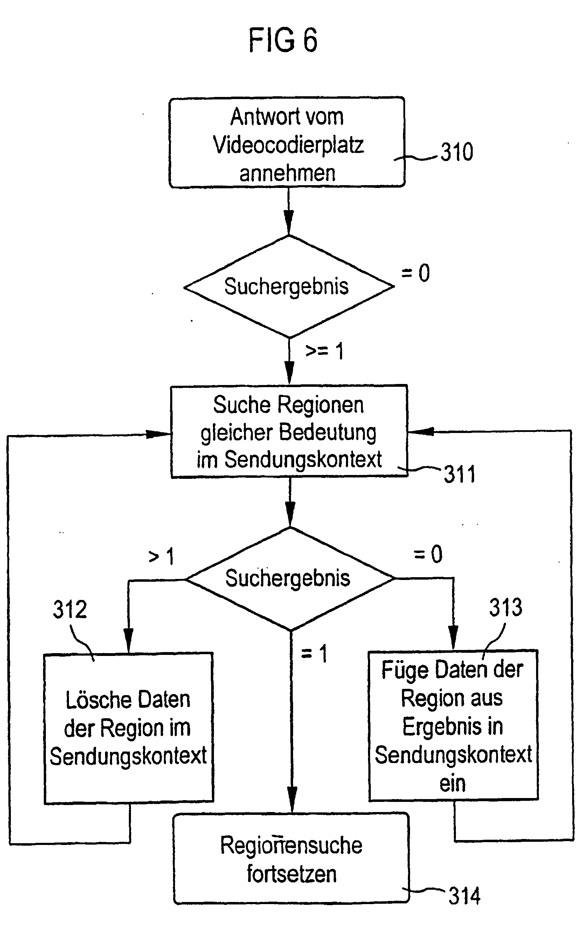

Das in Figur 6 angegebene Ablaufdiagramm beschreibt die Funktionsweise des Antwortbearbeiters 14. Nach Annahme 310 der Antwort von der Videocodiereinrichtung 20 wird überprüft, ob als Suchergebnis Regionen ermittelt wurden. Ist das nicht der Fall, so wird die Regionensuche in der OCR-Verarbeitungseinheit 11 fortgesetzt 314, wobei dann ein Abbruch der Verarbeitung erfolgt. Wardie Regionensuche in der Videocodiereinrichtung 20 erfolgreich, wird im Kontextspeicher 12 geprüft, ob dort entsprechende Regionen mit gleicher Bedeutung vorhanden sind. Wenn ja, erfolgt eine Löschung dieser Daten 312. Sind Daten über diese Region im Kontextspeicher nicht mehr vorhanden, so werden die Daten aus der Videocodierung in den Kontextspeicher 12 eingefügt 313.

Nach Wiederaufnahme der Bearbeitung durch die Regionensuche wird wie gewohnt der Sendungskontext an die nachfolgende(n) Verarbeitungseinheit (en) weitergereicht. In diesem Beispiel ist das sowohl die Stempelerkennung, als auch die Zeichenverarbeitung (OCR), da diese beiden Einheiten nicht von den Ergebnissen der jeweils anderen abhängen.

Die Stempelerkennung kommt hierbei für einfache Aufgaben ohne weitere Codierer Interaktion aus, da der Stempel entweder deutlich genug ist um ihn anhand seiner Gestalt eindeutig zu erkennen oder er so verschmiert ist, daß eine Interaktion mit einem Videocodierer keine wesentliche Steigerung des Ergebnisses bringt.

Die Zeichenverarbeitung, die einzelne Zeichen erkennt, diese zu Worten gruppiert und diese Worte einzelnen Zeilen zuordnet, bringt ihrerseits viele Alternativen hervor. Die Daten (Zeichen) werden mit allen möglichen Verknüpfungen zu Worten und Zeilen im Sendungskontext abgelegt.

Die dabei entstehende Information ist jedoch für romanische Schrift zu vielfältig um ergonomisch aufbereitet zu werden, sodaß sie hier nicht näher betrachtet wird. Bei Schriften, die auf Wort- bzw. Silbenalphabeten basieren (z.B: Chinesisch) ist es jedoch denkbar auch hier eine Interaktion zu integrieren.

Der Ausgang der Zeichenverarbeitung reicht den Sendungskontext an die Adreßinterpretation weiter.

### Adreßinterpretation

Diese Verarbeitungseinheit versucht die Bedeutung der einzelnen Worte zu erfassen und daraus eine konsistente Adresse zu konstruieren, der eine eindeutige Verteilinformation zugeordnet werden kann.

Dabei werden den einzelnen Worten im Sendungskontext Bedeutungshypothesen zugeordnet, die sich zu einer vollständigen, syntaktisch korrekten Adresse ergänzen müssen.

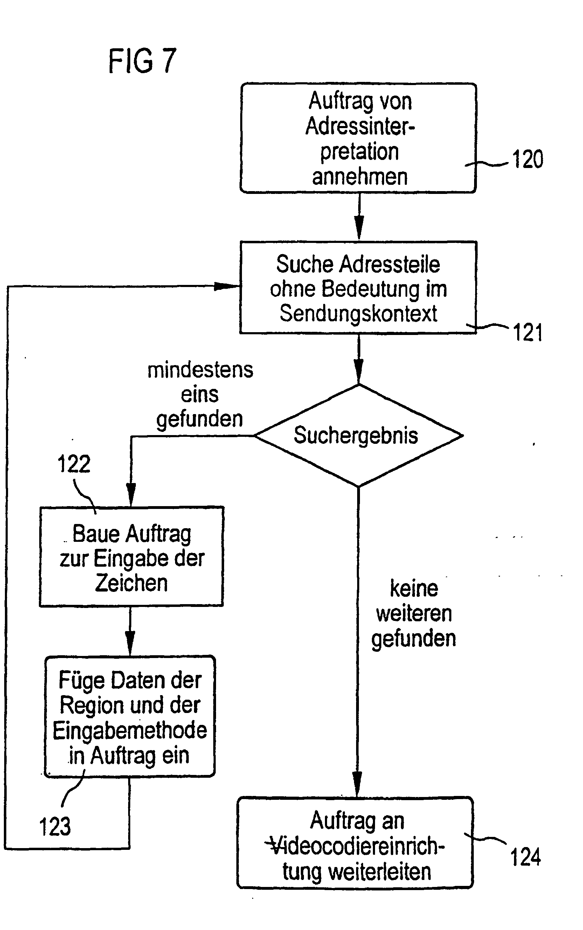

Die sich ergebenden Adreßvarianten werden mittels einer Datenbank abgeglichen, die alle relevanten Adressen enthält. Die Adreßvarianten ergeben sich durch Iteration über mehrere Schritte, bei denen jeweils einzelne Adressteile (z.B. Postcode und Stadt) bearbeitet werden.
Kann einzelnen Worten in der Adresse keine eindeutige Bedeutung zugeordnet werden, ruft die Adreßinterpretation einen Auftragsformulierer 13 auf, der den Sendungskontext nach Adreßteilen durchsucht, deren Bedeutung unklar ist, da z.B. die Zeichen nur unvollständig erkannt werden konnten. Die Funktionsweise des Aufcragsformulierers 13 ist im Ablaufdiagramm der Figur 7 beschrieben.
Nach Annahme des Auftrages zur Zeicheneingabe 120 werden Adreßteile ohne eindeutige Bedeutung im Kontextspeicher gesucht 121. Ist die Suche positiv, so wird ein Eingabeauftrag für die unklaren Zeichen formuliert 122, wobei die Daten der Region und die Eingabemethode eingefügt werden 123. Wurden alle unklaren Adreßteile ermittelt und entsprechende Aufträge formuliert, so wird ein Gesamtauftrag an die Videocodiereinrichtung 20 weitergeleitet 124.

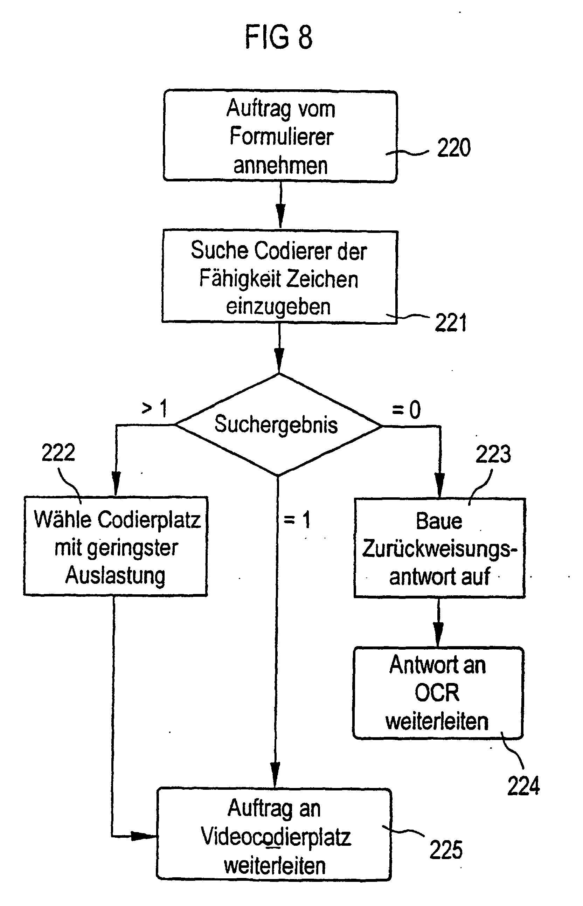

Die Gegenstelle der Videocodiereinrichtung 20, der Auftragsverteiler 21, ermittelt nach Auftragsannahme 220 die Art des Auftrages, um in seiner Codierplatzdatenbank 22 den oder die verfügbaren Videocodierplätze zu suchen 221, dessen Bediener die zur Lösung dieser Aufgabe benötigten Fähigkeiten besitzen, und der bei mehreren Videocodierplätzen die geringste Auslastung aufweist 222. Wurde der entsprechende Videocodierplatz ermittelt, so wird ein Auftrag an diesen weitergeleitet 225. Konnte kein zur Verfügung stehenderVideocodierplatz ermittelt werden, wird eine Zurückweisungsantwort formuliert 223, die an die OCR-Verarbeitungseinheit 11 weitergeleitet wird 224 (siehe Figur 8).

Der Fall, keinen geeigneten Codierplatz zu finden, kann vor allem bei kleinen Codiersystem mit stark diversifizierten Codieraufgaben zu einer Verlängerung der Bearbeitungszeit führen, da in diesem Fall die Bearbeitung im Leser abgebrochen wird um zu einem späteren Zeitpunkt, wenn geeignete Codierer wieder verfügbar sind, erneut aufgesetzt zu werden.

Der Codiervorgang selbst ist möglichst ergonomisch zu gestalten.

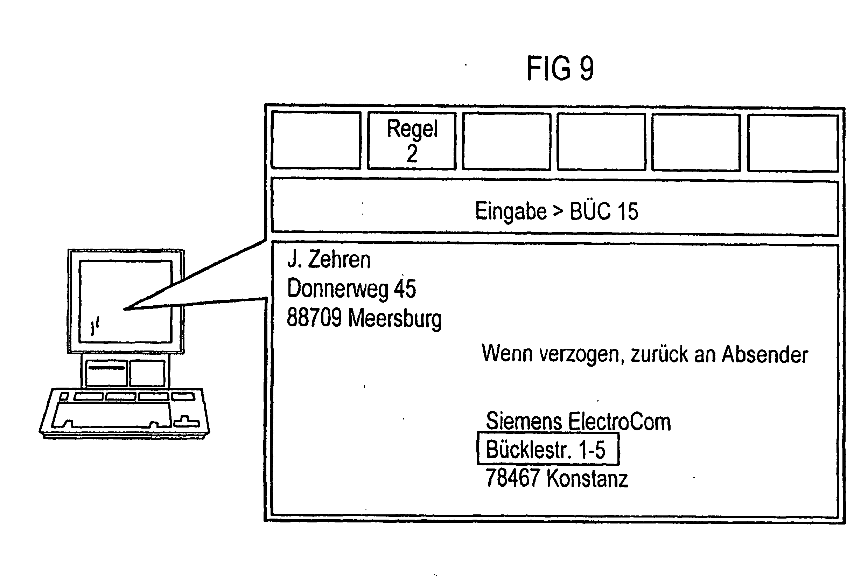

Figur 9 zeigt die graphische Aufbereitung der Daten auf dem Codierplatz. Die Eingabe erfolgt über die Standardtastatur. Die Eingabemethode (z.B die ersten 3 Zeichen des ersten Wortes und die Ziffern) wird durch die Anfrage festgelegt, da sie von den Zugriffmethoden der verwendeten Datenbank abhängt.

Das Ergebnis dieser Eingabe wird an den Leser zurückgesandt. Enthält die Anfrage mehrere Regionen, werden diese in mehreren Schritte bearbeitet.

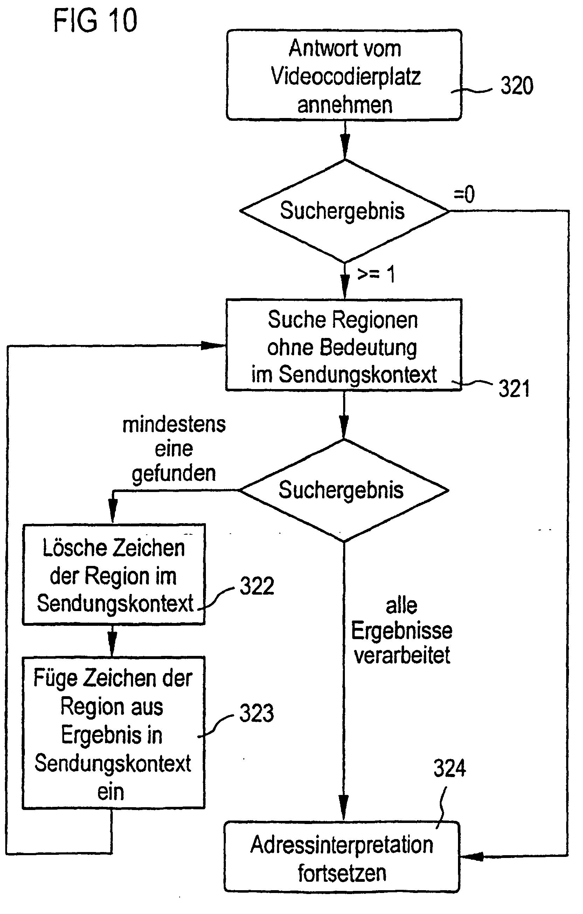

Der Antwortbearbeiter 14 der Adreßinterpretation löscht die mehrdeutigen Zeichen und Worte der nicht erkannten Regionen im Sendungskontext und fügt die Zeichen aus dem Ergebnis ein. Somit ist nun für jede zu bearbeitende Region ein eindeutiges Ergebnis verfügbar.
Das Ablaufdiagramm der Figur 10 beschreibt die Funktionsweise des Antwortbearbeiters 14.
Nach Annahme 320 der Antwort von der Videocodiereinrichtung 20 wird überprüft, ob eine Antwort zum Auftrag vorliegt. Ist das nicht der Fall, wird die Adreßinterpretation in der OCR-Verarbeitungseinheit fortgesetzt 324, wobei dann ein Abbruch der Verarbeitung erfolgt. Wurde eine erfolgreiche Videocodierung durchgeführt, so werden im Kontextspeicher 12 die Regionen ohne Bedeutung gesucht 321. Werden solche Regionen gefunden, so werden die entsprechenden Zeichen gelöscht 322, die Zeichendaten aus der Videocodierung in den Sendungskontext eingefügt 323 und die Adreßinterpretation fortgesetzt 324.

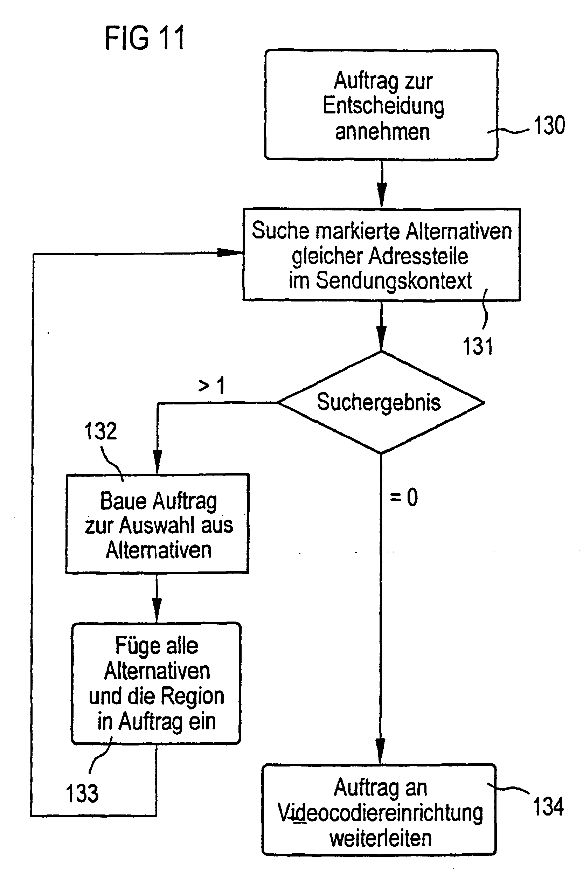

Können nach Wiederaufnahme der Bearbeitung durch die Adreßinterpretation die Adressen bzw. die Teiladressen nicht eindeutig definiert werden, durchsucht ein Entscheider im Rahmen der Adreßinterpretation den Sendungskontext nach allen alternativen Bedeutungen einer Teiladresse oder Adresse. Auf der Basis von verschiedenen Entscheidungskriterien (z.B. der Glaubwürdigkeit der einzelnen Alternativen, definierte Fehlerrate) versucht der Entscheider ein eindeutiges Ergebnis zu erzielen bzw. er baut eine Liste möglicher Kandidaten auf. Die durch den Entscheider reduzierte Liste möglicher Kandidaten wird markiert und der entsprechende Auftragsformulierer beauftragt.
Das Ablaufdiagramm der Figur 11 beschreibt die Funktionsweise des Auftragsformulierers 13.
Nach Annahme des Auftrages zur Entscheidung 130 von Adreßalternativen werden markierte Alternativen gleicher Adressen/Adreßteile im Sendungskontext gesucht 131. Ist die Suche positiv, so wird ein Auswahlauftrag 132 formuliert. Die Alternativen und die Region werden in den Auftrag eingefügt 133. Wurden alle markierten Alternativen gefunden, so wird ein entsprechender Auftrag an die Videocodiereinrichtung weitergeleitet 134.

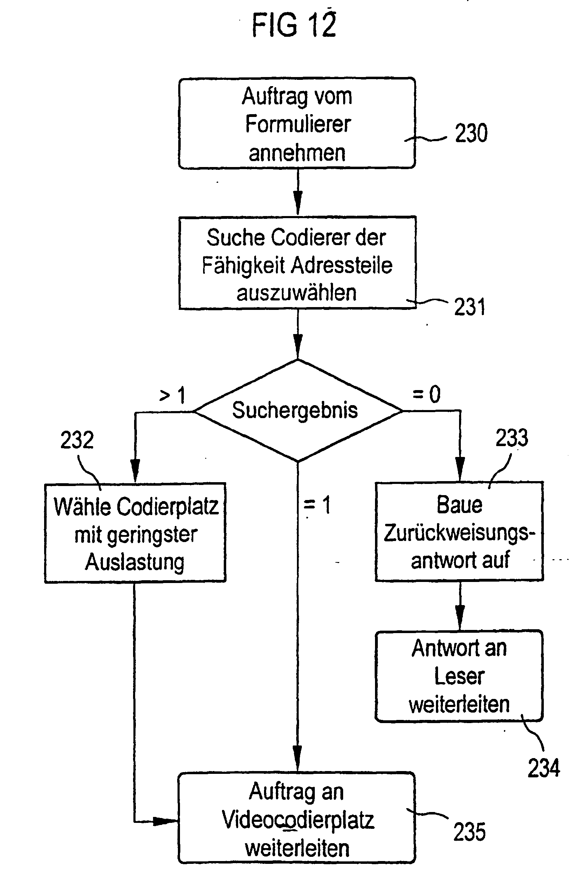

Die Gegenstelle in der Videocodiereinrichtung 20 der Auftragsverteiler, ermitteln nach Auftragsannahme 230 die Art des Auftrages, um aus seiner Codierplatzdatenbank 22 den oder die verfügbaren Videocodierplätze zu suchen 231, deren Bediener die zur Lösung dieser Aufgabe benötigten Fähigkeiten besitzen, und der bei mehreren ermittelten Videocodierplätzen die geringste Auslastung aufweist 232. Wurde dieser Videocodierplatz ermittelt, so wird ein Auftrag an diesen weitergeleitet 235. Konnte kein für diese Aufgabe zur Verfügung stehender Videocodierplatz ermittelt werden, wird eine Zurückweisungsantwort formuliert 233, die an die OCR-Verarbeitungseinheit 11 weitergeleitet wird 234 (siehe Figur 12).

Der Fall, keinen geeigneten Codierplatz zu finden kann vor allem bei kleinen Codiersystem mit stark diversifizierten Codieraufgaben zu einer Verlängerung der Bearbeitungszeit führen, da in diesem Fall die Bearbeitung abgebrochen wird, um zu einem späteren Zeitpunkt, wenn geeignete Codierer wieder verfügbar sind, erneut aufgesetzt zu werden. Der Codiervorgang selbst ist möglichst ergonomisch zu gestalten.

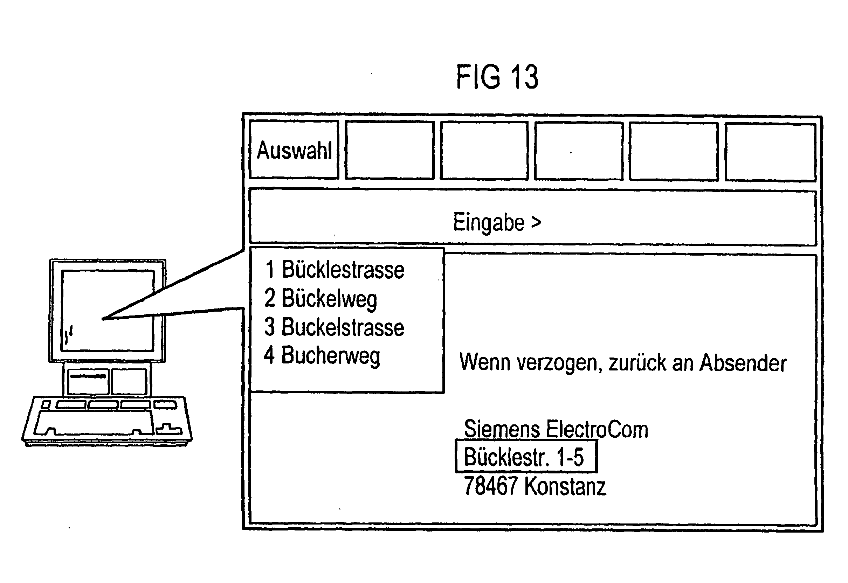

Figur 13 zeigt die graphische Aufbereitung der Daten auf dem Codierplatz. Die Eingabe erfolgt über die Standardtastatur.

Das Ergebnis der Codierereingabe, die Nummer der Alternative, wird dazu verwendet die Daten dieser Alternative als Ergebnis an den Leser zurückzusenden. Enthält der Auftrag die Auswahl verschiedener Adreßteile, erfolgt die Bearbeitung in mehreren Schritten.

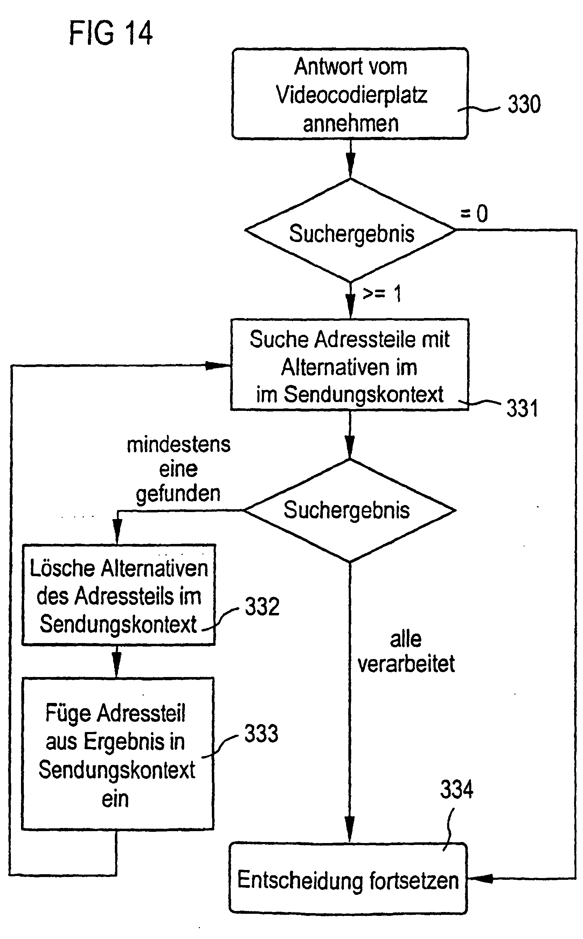

Der Antwortbearbeiter für den Entscheidungsauftrag löscht die Alternativen der bearbeiteten Adreßteile und fügt die Daten aus dem Ergebnis ein. Das Ablaufdiagramm der Figur 14 beschreibt die Funktionsweise.
Nach Annahme 330 der Antwort von der Videocodiereinrichtung 20 wird überprüft, ob eine Antwort zum Auftrag vorliegt. Ist das nicht der Fall, wird der Entscheidungsprozeß in der OCR-Verarbeitungseinheit 20 fortgesetzt 334, wobei dann ein Abbruch erfolgt. Wurde eine erfolgreiche Videocodierung durchgeführt, so werden die alternativen Adreßteile im Kontextspeicher 12 gesucht 331 und gelöscht 332. Dann wird der Adreßteil aus der Videocodierung in den Kontextspeicher eingefügt 333 und die Entscheidungsfindung wird mit der Ausgabe des Ergebnisses fortgesetzt 334.

**Patentansprüche**

## Patentansprüche

1. Verfahren zum Erkennen von Verteilinformationen auf Sendungen mit automatischem Lesen
mit Hilfe der OCR-Verarbeitung der aufgenommenen und gespeicherten Bilder der die Verteilinformationen enthaltenden Sendungsoberflächen,
bei dem das automatische Lesen in mehreren Verfahrensschritten,
wie z. B. Ermittlung der interessierenden Gebiete (1) (ROI), Briefmarken lesen (2), Zeilenseparierung, Segmentierung, Zeichen- und Worterkennung (4), Adressinterpretation (5) mit Adressanalyse und Adressabgleich in Adressdatenbank,
durchgeführt wird,
der jeweils nachfolgende Verarbeitungsschritt ausgeführt wird, wenn der vorherige Verfahrensschritt mit einem eindeutigen Ergebnis beendet wurde, und
mit Videocodierung von nicht automatisch eindeutig erkannten Verteilinformationen in einer Videocodiereinrichtung (20) mit Videocodierplätzen (7),
auf deren hochauflösenden Bildschirmen die übersandten entsprechenden Bilder mit den Verteilinformationen dargestellt werden,
wobei bei nichteindeutigen Ergebnissen in jeweils einem der automatisch ablaufenden Verfahrensschritte (1-6) ein Auftrag zur Videocodierung zur Erzielung eindeutiger Ergebnisse dieses Verfahrensschritts (1 - 6) an einen oder mehrere Videocodierplätze (7) übertragen wird und
mit den eindeutigen Codierergebnissen der nachfolgende Verfahrensschritt gestartet wird,
**dadurch gekennzeichnet, dass**
- die Verfahrensschritte neben- und nacheinander ablaufen,
- bei nichteindeutigen Ergebnissen in jeweils einem der automatisch ablaufenden Verfahrensschritte (1 - 6) zum Lesen dieser Verfahrensschritt im aktuellen Zustand verharrt,
- der jeweils nachfolgende Verfahrensschritt nur ausgeführt wird, wenn der vorherige Verfahrensschritt mit einem eindeutigen Ergebnis beendet wurde,
- der Auftrag zur Videocodierung mit Angabe der nichteindeutigen und fehlenden Ergebnisse und mit Angabe der auszuführenden Operationen zur Erzielung eindeutiger Ergebnisse dieses Verfahrensschritts (1 - 6) übertragen wird,
- in der Videocodiereinrichtung (20) jeder Videocodierplatz (7) nur für einen Teil der verschiedenen Videocodieraufgaben zuständig ist,
- die Codieraufträge nach den Aufgabenklassen und den dafür zuständigen Videocodierplätzen (7) auf diese verteilt werden und
- mit den eindeutigen Codierergebnissen, die die nichteindeutigen Ergebnisse ersetzen, der verharrende Verfahrensschritt des automatischen Lesens erfolgreich beendet und der nachfolgende Verfahrensschritt gestartet wird.

2. Verfahren nach Anspruch 1,
**dadurch gekennzeichnet, dass**
bei der Videocodierung auf den Bildschirm des jeweiligen Videocodierplatzes (7)
- ein die zu lesende Verteilinformation enthaltendes Bild,
- die zu lösende Aufgabe/n und
- die hierzu bisher ermittelten Ergebnisse und/oder Teilergebnisse
dargestellt werden.

3. Verfahren nach Anspruch 1,
**dadurch gekennzeichnet, dass**
die Codieraufträge zusätzlich nach der momentanen Auslastung der Videocodierplätze (7) auf diese verteilt werden.

4. Anordnung zum Erkennen von Verteilinformationen auf Sendungen, enthaltend
- eine automatische OCR-Verarbeitungseinheit (11) mit verschiedenen Funktionsgruppen,
wie zur Ermittlung der interessierenden Bereiche ROI, Zeilenreparierung, Segmentierung, Zeichen- und Worterkennung, Adressanalyse, Adressabgleich in einer angeschlossenen Adressdatenbank, und
- eine Videocodiereinrichtung (20) mit mehreren Videocodierplätzen (7) für die nicht von der OCR-Verarbeitungseinheit (11) eindeutig gelesenen Verteilinformationen,
wobei die automatische OCR-Verarbeitungseinheit (11) so ausgebildet ist,
- dass bei nichteindeutigen oder fehlenden Zwischenergebnissen und/oder Ergebnissen der Funktionsgruppen dementsprechend eine Auftragsmeldung zur Videocodierung der nichteindeutig gelösten Aufgaben an die Videocodiereinrichtung (20) ausgelöst wird und
- dass die OCR-Verarbeitungseinheit (11) nach Erhalt der eindeutigen Videocodierergebnisse die Bearbeitung fortsetzt,
**dadurch gekennzeichnet, dass**
- die OCR-Verarbeitungseinheit (11) so ausgestaltet ist, dass die Ergebnisse, Teilergebnisse, der Status der Verteilinformationsermittlung und die Eingabedaten in einen Kontextspeicher (12) abgelegt werden,
- in der Videocodiereinrichtung (20) jeder Videocodierplatz (7) nur für einen Teil der verschiedenen Videocodieraufgaben zuständig ist,
- die automatische OCR-Verarbeitungseinheit (11) so ausgebildet ist,
- dass bei nichteindeutigen oder fehlenden Zwischenergebnissen und/oder Ergebnissen der Funktionsgruppen diese Funktionsgruppen jeweils im aktuellen Zustand verharren,
- dass die dementsprechend ausgelöste Auftragsmeldung zur Videocodierung der nichteindeutig gelösten Aufgaben mit Angabe der nichteindeutigen und fehlenden Ergebnisse und mit Angabe der auszuführenden Operationen zur Erzielung eindeutiger Ergebnisse übertragen wird,
- dass die Codieraufträge nach den Aufgabenklassen und den dafür zuständigen Videocodierplätzen auf diese Videocodierplätze (7) verteilt werden und
- dass die OCR-Verarbeitungseinheit (11) nach Erhalt der eindeutigen Videocodierergebnisse mit diesen die unterbrochene Bearbeitung fortsetzt.

## Claims

1. Method for recognizing distribution information on mail by means of automatic reading
with the aid of the OCR processing of the recorded and stored images of the mail surfaces containing the distribution information,
in which the automatic reading is carried out in a plurality of method steps
such as e.g. determination of the regions of interest (1) (ROI), stamp reading (2), line separation, segmentation, character and word recognition (4), address interpretation (5) with address analysis and address adjustment in address database,
the respective subsequent method step is performed if the previous method step has ended with an unambiguous result, and
with video coding of distribution information not automatically recognized unambiguously in a video coding device (20) with video coding stations (7),
on whose high-resolution screens the transmitted corresponding images with the distribution information are displayed,
wherein, in the case of ambiguous results in a respective one of the automatically proceeding method steps (1-6), a job for video coding for obtaining unambiguous results of this method step (1 - 6) is transmitted to one or more video coding stations (7) and, with the unambiguous coding results, the subsequent method step is started, **characterized in that**
- the method steps proceed alongside one another and successively,
- in the case of ambiguous results in a respective one of the automatically proceeding method steps (1 - 6) for reading, this method step remains in the current state,
- the respective subsequent method step is performed only if the previous method step has ended with an unambiguous result,
- the job for video coding is automatically generated from the unambiguous and ambiguous results and intermediate results respectively determined hitherto for this,
- the job for video coding with specification of the ambiguous and absent results and with specification of the operations to be performed for obtaining unambiguous results of this method step (1 - 6) is transmitted,
- in the video coding device (12), each video coding station (7) is responsible only for a portion of the various video coding tasks,
- the coding jobs are distributed between the video coding stations (7) according to the task classes and the video coding stations (7) responsible therefor, and
- with the unambiguous coding results which replace the ambiguous results, the persisting method step of automatic reading is successfully ended and the subsequent method step is started.

2. Method according to Claim 1,
**characterized**
**in that**,
- during the video coding,
- an image containing the distribution information to be read,
- the task(s) to be achieved and
- the results and/or partial results determined hitherto for this
- are displayed on the screen of the respective video coding station (7).

3. Method according to Claim 1,
**characterized**
**in that**, the coding jobs are additionally distributed between the video coding stations (7) according to the instantaneous capacity utilization of said video coding stations.

4. Arrangement for recognizing distribution information on mail, containing
- an automatic OCR processing unit (11) with various functional groups,
such as for the determination of the regions of interest ROI, line separation, segmentation, character and word recognition, address analysis, address adjustment in a connected address database, and
- a video coding device (20) with a plurality of video coding stations (7) for the distribution information not read unambiguously by the OCR processing unit (11), wherein the automatic OCR processing unit (11) is designed in such a way
- that, in the case of ambiguous or absent intermediate results and/or results of the functional groups, accordingly, a job message for the video coding of the tasks not achieved unambiguously to the video coding device (20) is initiated, and
- that the OCR processing unit (11), after receiving the unambiguous video coding results, continues the processing,
**characterized in that**
- the OCR processing unit (11) is designed in such a way that the results, partial results, the status of the distribution information determination and the input data are stored in a context memory (12),
- in the video coding device (21) each video coding station (7) is responsible only for a portion of the various video coding tasks,
- the automatic OCR processing unit (11) is designed in such a way
- that, in the case of ambiguous or absent intermediate results and/or results of the functional groups, said functional groups in each case remain in the current state,
- that the correspondingly initiated job message for the video coding tasks not achieved unambiguously with specification of the ambiguous and absent results and with specification of the operations to be performed for obtaining unambiguous results is transmitted,
- that the coding jobs are distributed between the video coding stations (7) according to the task classes and the video coding stations responsible therefor, and
- that the OCR processing unit (11) after receiving the unambiguous video coding results, continues the interrupted processing with the latter.

## Revendications

1. Procédé pour la reconnaissance d'informations de distribution sur des envois avec lecture automatique à l'aide du traitement OCR des images reçues et mémorisées des surfaces d'envoi contenant les informations de distribution,
dans lequel la lecture automatique est effectuée en plusieurs étapes de procédé,
comme, par exemple, la détermination des zones intéressantes ( 1 ) ( ROI ), la lecture de timbres ( 2 ), la séparation de lignes, la segmentation, la reconnaissance de caractères et de mots ( 4 ), l'interprétation d'adresse ( 5 ) avec analyse d'adresse et ajustement d'adresse dans des bases de données d'adresses,
dans lequel l'étape de procédé respectivement suivante est effectuée si la précédente s'est terminée avec un résultat clair, et
avec codage vidéo d'informations de distribution non reconnues automatiquement de manière claire dans un dispositif de codage vidéo ( 20 ), comportant des postes de codage vidéo ( 7 ),
sur les écrans à haute résolution desquels sont présentées les images correspondantes transmises avec les informations de distribution,
dans lequel, en cas de résultats qui ne sont pas clairs dans l'une des étapes de procédé respectives s'exécutant automatiquement ( 1 à 6 ), un ordre de codage vidéo, pour atteindre des résultats clairs de cette étape de procédé, est transmis à un ou plusieurs postes de codage vidéo ( 7 ) et, avec les résultats clairs du codeur, l'étape de traitement suivante est lancée,
**caractérisé en ce que**
- les étapes du procédé se déroulent les unes à côté des autres et les unes après les autres,
- si des résultats ne sont pas clairs respectivement dans l'une des étapes du procédé s'exécutant automatiquement ( 1 à 6 ) pour la lecture, cette étape du procédé est bloquée dans l'état présent,
- l'étape du procédé suivante respectivement n'est effectuée que si l'étape du procédé précédente s'est terminée avec un résultat clair,
- l'ordre de codage vidéo est produit automatiquement à partir du résultat respectif clair déterminé à cet effet jusqu'ici et des résultats qui n'ont pas été clairs et de résultats intermédiaires,
- l'ordre de codage vidéo est transmis avec indication des résultats qui ne sont pas clairs et des résultats manquants et avec indication des opérations à effectuer pour obtenir des résultats clairs de cette étape du procédé 1 à 6,
- dans le dispositif ( 20 ) de codage vidéo, chaque poste
( 7 ) de codage vidéo n'est compétent que pour une partie des tâches de codage vidéo différentes,
- les ordres de codage sont répartis suivant les classes de tâches et suivant les postes ( 7 ) de codage vidéo compétents à cet effet entre ceux-ci, et
- par les résultats de codage clairs, qui remplacent les résultats qui ne sont pas clairs, il est mis fin avec succès à l'étape du procédé bloquée de la lecture automatique et l'étape de procédé suivante est lancée.

2. Procédé suivant la revendication 1,
**caractérisé en ce que**
dans le codage vidéo sur l'écran du poste ( 7 ) de codage vidéo respectif, sont représentés
- une image contenant l'information de répartition à lire,
- la ou les tâches à déclencher et
- les résultats déterminés jusqu'ici à cet effet et/ou des résultats partiels.

3. Procédé suivant la revendication 1,
**caractérisé en ce que**
les ordres de codage sont répartis sur les postes ( 7 ) de codage vidéo suivant leur charge instantanée.

4. Dispositif pour la reconnaissance d'informations de distribution sur des envois, contenant
- une unité de traitement OCR automatique ( 11 ) ayant différents groupes fonctionnels,
comme pour la détermination des zones intéressantes ROI, pour la séparation de lignes, pour la segmentation, pour la reconnaissance de caractères et de mots, pour l'analyse d'adresse, pour l'ajustement d'adresse dans une base de données d'adresses raccordée, et
- un dispositif de codage vidéo ( 20 ) ayant plusieurs postes de codage vidéo ( 7 ) pour les informations de distribution qui ne sont pas lues de manière claire par l'unité de traitement OCR ( 11 ),
dans lequel l'unité de traitement OCR ( 11 ) automatique est conçue de telle sorte que,
- si des résultats intermédiaires et/ou des résultats des groupes de fonction ne sont pas clairs ou sont manquants, il est déclenché en conséquence un message d'ordre pour le codage vidéo des tâches qui ne sont pas déclenchées de manière claire vers le dispositif de codage vidéo ( 20 ), et
- l'unité de traitement OCR ( 11 ) poursuit le traitement
après obtention des résultats de codage vidéo clairs, **caractérisé en ce que**
- l'unité de traitement OCR (11) est telle que les résultats, les résultats partiels, l'état de la détermination d'informations de distribution et les données d'entrée sont mémorisés dans une mémoire de contexte ( 12 ),
- dans le dispositif de codage vidéo ( 20 ), chaque poste de codage vidéo ( 7 ) n'est compétent que pour une partie des diverses tâches de codage vidéo,
- l'unité de traitement OCR ( 11 ) automatique est telle
- que, si les résultats intermédiaires et/ou les résultats des groupes de fonction ne sont pas clairs ou sont manquants, ces groupes de fonction sont bloqués respectivement dans l'état présent,
- le message d'ordre déclenché en conséquence, pour le codage vidéo des tâches résolues d'une manière pas claire, est transmis avec l'indication des résultats qui ne sont pas clairs et qui sont manquants et avec l'indication des opérations à effectuer pour obtenir des résultats clairs,
- les ordres de codage sont répartis suivant les classes de tâche et suivant les postes de codage vidéo compétents à cet effet entre ces postes ( 7 ) de codage vidéo, et
- l'unité de traitement OCR (11) poursuit, après obtention des résultats de codage vidéo clairs, avec ceux-ci le traitement interrompu.
